# EUROPEAN PATENT SPECIFICATION

(11) **EP 4 566 899 B1**
(45) Date of publication and mention of the grant of the patent: **19.08.2026**
(21) Application number: 23215173.8
(22) Date of filing: 08.12.2023
(51) Int. Cl.: B60T 17/22, B60T 8/171

(54) **A COMPUTER SYSTEM AND A COMPUTER-IMPLEMENTED METHOD FOR BRAKE TEMPERATURE ESTIMATION FOR A HEAVY-DUTY VEHICLE**
COMPUTERSYSTEM UND COMPUTERIMPLEMENTIERTES VERFAHREN ZUR BREMSTEMPERATURSCHÄTZUNG FÜR EIN SCHWERLASTFAHRZEUG
SYSTÈME INFORMATIQUE ET PROCÉDÉ MIS EN OEUVRE PAR ORDINATEUR POUR L'ESTIMATION DE LA TEMPÉRATURE DE FREINAGE POUR UN VÉHICULE UTILITAIRE LOURD

(43) Date of publication of application: 11.06.2025
(73) Proprietor: VOLVO TRUCK CORPORATION, 405 08 Göteborg (SE)
(72) Inventor: JAIN, Pratham, 418 70 Göteborg (SE); VIKSTRÖM, Anders, 417 04 Göteborg (SE)
(74) Representative: Zacco Sweden AB

(56) References cited:
- CN-A- 111 775 687
- KR-B1- 101 843 765
- US-A1- 2003 081 650

## Description

### TECHNICAL FIELD

The invention relates generally to temperature estimation. In particular aspects, the invention relates to a computer system and a computer-implemented method for brake temperature estimation for a heavy-duty vehicle. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

Brake temperature estimation may be used by several functions in a vehicle. Examples of such functions include brake fading warning, brake performance warning, adaptive cruise control, downhill cruise control, etc. Currently used methods for brake temperature estimation typically assumes a fixed cooling rate of the brakes. Although this may generally work well for passenger cars, which have usually a fixed geometry, it does not work as well for heavy-duty vehicles such as trucks, which may have different chassis configurations, such as different number of wheel axles, different wheelbase, liftable axles, etc. The actual cooling rate of the brakes for heavy-duty vehicles therefore often differs considerably from the assumed fixed value. Thus, it would be desirable to provide an improved brake temperature estimation with respect to heavy-duty vehicles.
KR 101 843 765 B1 discloses an electronically controlled brake system. A heat dissipation temperature is calculated based on outside temperature and vehicle speed. Based on the calculated heat dissipation temperature, the temperature of a brake disc is estimated. Overheating prevention is controlled based on the estimated temperature.
CN 111 775 687 A discloses a multifunctional electric wheel assembly. Control strategy of braking is adopted by combining vector control and flux weakening control.

### SUMMARY

According to a first aspect of the invention, there is provided a computer system for brake temperature estimation for a heavy-duty vehicle, the computer system comprising processing circuitry configured to:
- receive brake chamber pressure data indicative of a determined pressure in brake chambers of the heavy-duty vehicle,
- receive vehicle speed data indicative of the current speed of the heavy-duty vehicle,
- receive ambient temperature data indicative of a determined ambient temperature at the heavy-duty vehicle,
- receive wheel axle data which include information about geometrical attributes of one or more wheel axles of the heavy duty vehicle, which geometrical attributes affect the airflow to the brakes, and
- estimate a brake temperature based on said received brake chamber pressure data, said vehicle speed data, said ambient temperature data and said wheel axle data. The first aspect of the invention may seek to solve the problem of more accurately estimate a brake temperature for different heavy-duty vehicle configurations. A technical benefit may include that, by not only taking into account the brake chamber pressure (which relates to the magnitude of the braking and thus heat generation), the vehicle speed (which relates to the flow rate of air passing through the brakes and thus heat dissipation) and the ambient temperature, but by also taking into account geometrical airflow-affecting attributes of a wheel axle, a more accurate estimation is possible. In particular, since the processing circuitry may already have information on said wheel axle data, it may readily use this information as input together with the other parameters (brake chamber pressure, vehicle speed and ambient temperature) in order to estimate the brake temperature. The processing circuitry may suitably also estimate a trend of heat build-up at the brakes and heat exchange with the environment and/or components surrounding the brakes.

Optionally in some examples, including in at least one preferred example, the estimation of the brake temperature performed by the processing circuitry may include accessing, by the processing circuitry, a database containing empirically determined brake temperature data. A technical benefit may include that brake temperature data may be collected in a controlled manner through empirical tests, and such data may then conveniently be used in a real brake estimation implementation. For instance, the empirically determined brake temperature data may be acquired by running different trucks under different conditions. For instance, tests may be made for a 4x2 truck (four axle ends, of which two are driven), 6x2 truck, 8x4 truck, etc, wherein actual temperature sensors are fitted to the brake to measure the brake temperature. The trucks may be driven at different speeds, in different ambient temperatures, be subjected to different brake forces, and with different geometrical attributes, such as a lift axle being in a raised or a lowered condition. The different parameter combinations and the resulting brake temperature measured by the fitted temperature sensors may conveniently be stored in a database, such as a look-up table. Thus, when the teachings of this invention are implemented in a real driving situation for a heavy-duty vehicle, the processing circuitry may, based on the received brake chamber pressure data, vehicle speed data, ambient temperature data and wheel axle data, access the look-up table to see which brake temperature corresponds to the actual combination of parameters that the received data represent. If the specific parameter combination is not present in the look-up table, the processing circuitry may suitably identify nearest neighboring values or make any suitable interpolation to estimate the current brake temperature.

Optionally in some examples, including in at least one preferred example, said geometrical attributes may include information about the position and/or an orientational state of one or more wheel axles relative to a chassis of the heavy-duty vehicle. A technical benefit may include that by taking into account the position of a wheel axle and/or its orientational state a more accurate brake temperature estimation may be made. For instance, in the case of a truck having a liftable pusher axle in front of a rear driven axle, the presence of the pusher axle in front of the rear driven axle will affect the air flow to the brakes of the rear driven axle, and will thus have influence on the cooling effect on those brakes. Furthermore, the air flow will be different if the pusher axle is in a lowered rolling condition or in a raised condition. By having access to information about such geometrical attributes, the brake temperature estimation may be made more accurate. The inclusions of an orientational state of a lift axle for brake temperature estimation is at least partly reflected in the below example.

Thus, optionally in some examples, including in at least one preferred example, said orientational state may be one of a raised condition or a lowered condition of a lift axle, such as a secondary front axle, pusher axle, or tag axle. As explained previously, a lift axle will affect the airflow to structures behind the lift axle in different ways depending on if the lift axle is in a raised condition or in a lowered condition. Thus, the cooling effect on brakes located behind the lift axle may also be differently affected depending on the current condition of the lift axle. Thus, by having information about the current condition (raised or lowered) of the lift axle, it is possible to make a more accurate estimation of the brake temperature.

Optionally in some examples, including in at least one preferred example, said wheel axle data may include information about the number of wheel axles of the heavy-duty vehicle. A technical benefit may include that information about number of wheel axles may allow for a more accurate estimation of the brake temperature for some of the brakes of the heavy-duty vehicle. For instance, the air flow reaching a brake at a rear axle may differ depending on the number of wheel axles that are provided in front of the rear axle.

Optionally in some examples, including in at least one preferred example, said wheel axle data may include information about a separating distance between at least two wheel axles. A technical benefit may include that information about such a separating distance may allow for a more accurate estimation of the brake temperature. For instance, larger separating distance may affect the airflow differently than a smaller separating distance.

Optionally in some examples, including in at least one preferred example, said wheel axle data include information about the wheelbase of the heavy-duty vehicle. Analogously to what has been explained different wheel base lengths may affect the cooling effect on rear brakes differently. Thus, including such information may allow for a more accurate estimation of the brake temperature.

Optionally in some examples, including in at least one preferred example, the processing circuitry may be further configured to receive dimensional data, the dimensional data including information on:
- the ride height of the chassis, and/or
- dimensions of protecting and/or shielding structures which are provided at the chassis and/or at a wheel axle of the heavy-duty vehicle,
wherein the estimation performed by the processing circuitry further comprises estimating the brake temperature also based on the received dimensional data.
A technical benefit may include that, in addition to the geometrical attributes of the wheel axle, other chassis-related structures may also affect the airflow to the brakes, such as the ride height of the chassis and protecting/shielding structures. Thus, by also taking into account such dimension data, an even more accurate estimation may be made. It should be understood that in case the estimation is performed using empirically stored data, then such empirically stored data may suitably be populated by measured brake temperature data, which are related to different dimensional data, in combination with the previously discussed various different parameters.

Optionally in some examples, including in at least one preferred example, said dimensional data may include at least one of:
a dimension of a front underrun protection,
a dimension of a side underrun protection,
a dimension of a brake dust shield,
a dimension of wheel caps,
a dimension of tyre size.
A technical benefit may include that, since such protecting/shielding structures affect the airflow, taking information about their dimensions into account may allow a more accurate estimation of the brake temperature to be made. For example, the processing circuitry may be configured to estimate the effective wheel radius. In some examples, the processing circuity may be configured to estimate the effective wheel radius to determine the size of the wheel caps.

Optionally in some examples, including in at least one preferred example, said brake temperature may be estimated for brakes of a first driven axle of the heavy-duty vehicle, in particular the first non-steered driven axle of the heavy-duty vehicle. A technical benefit may include that, since the first driven axle, is commonly a rear axle provided behind at least a front axle, there are various structural features (including the front axle) that may affect the airflow to the brakes of the first driven axle. In other words, the possible variations between different individual trucks may be much larger when it comes to structures that affect the brake temperature at a first driven axle (normally a rear axle) compared to structures that affect the brake temperature at a first non-driven axle (normally a front axle). Therefore, implementing the teachings of this invention for estimating the brake temperature of brakes at a first driven axle may result in a considerable improvement with respect to estimation accuracy as compared to traditional estimations available in the prior art. It should, however, be understood that in some examples, the brake temperature may be estimated for brakes of another axle, such as a first non-driven axle of the heavy-duty vehicle, in particular a first steered non-driven axle of the heavy-duty vehicle. For instance, features such as the presence and dimension of a front underrun protection and brake dust shield at the front axle, may have substantial effect on the brake temperature of the brakes at a first non-driven axle (normally a front axle).

According to a second aspect of the invention, there is provided a vehicle comprising the computer system of the first aspect, including any examples thereof. The second aspect of the invention may seek to solve the same problem and provide the same technical benefit as the first aspect, including any example thereof.

According to a third aspect of the invention, there is provided a computer-implemented method for brake temperature estimation for a heavy-duty vehicle, comprising:
- receiving, by processing circuity, brake chamber pressure data indicative of a determined pressure in brake chambers of the heavy-duty vehicle,
- receiving, by the processing circuitry, vehicle speed data indicative of the current speed of the heavy-duty vehicle,
- receiving, by the processing circuitry, ambient temperature data indicative of a determined ambient temperature at the heavy-duty vehicle,
- receiving, by the processing circuitry, wheel axle data which include information about geometrical attributes of one or more wheel axles of the heavy duty vehicle, which geometrical attributes affect the airflow to the brakes, and
- estimating, by the processing circuitry, a brake temperature based on said received brake chamber pressure data, said vehicle speed data, said ambient temperature data and said wheel axle data.
The third aspect of the invention may seek to solve the same problem and provide the same technical benefit as the first aspect, including any example thereof.

Various examples of the method of the third aspect are listed herein below. The technical benefits of the various examples are largely analogous to the corresponding examples of the first aspect.

Optionally in some examples, including in at least one preferred example, said act of estimating a brake temperature further may comprise accessing a database containing empirically determined brake temperature data.

Optionally in some examples, including in at least one preferred example, said geometrical attributes may include information about the position and/or an orientational state of one or more wheel axles relative to a chassis of the heavy-duty vehicle.

Optionally in some examples, including in at least one preferred example, said orientational state may be one of a raised condition or a lowered condition of a lift axle, such as a secondary front axle, pusher axle, or tag axle.

Optionally in some examples, including in at least one preferred example, said wheel axle data may include information about the number of wheel axles of the heavy-duty vehicle.

Optionally in some examples, including in at least one preferred example, said wheel axle data may include information about a separating distance between at least two wheel axles.

Optionally in some examples, including in at least one preferred example, said wheel axle data include information about the wheelbase of the heavy-duty vehicle.

Optionally in some examples, including in at least one preferred example, the method may further comprise receiving dimensional data, the dimensional data including information on:
- the ride height of the chassis, and/or
- dimensions of protecting and/or shielding structures which are provided at the chassis and/or at a wheel axle of the heavy-duty vehicle,
wherein said estimation further comprises estimating the brake temperature also based on the received dimensional data.

Optionally in some examples, including in at least one preferred example, said dimensional data may include at least one of:
a dimension of a front underrun protection,
a dimension of a side underrun protection,
a dimension of a brake dust shield,
a dimension of wheel caps,
a dimension of tyre size.

Optionally in some examples, including in at least one preferred example, said brake temperature may be estimated for brakes of a first driven axle of the heavy-duty vehicle, in particular the first non-steered driven axle of the heavy-duty vehicle.

According to a fourth aspect of the invention, there is provided a computer program product comprising program code for performing, when executed by the processing circuitry, the method of the third aspect, including any examples thereof. The fourth aspect of the invention may seek to solve the same problem and provide the same technical benefit as the first aspect, including any example thereof.

According to a fifth aspect of the invention, there is provided a non-transitory computer-readable storage medium comprising instructions, which when executed by the processing circuitry, cause the processing circuitry to perform the method of the third aspect, including any examples thereof. The fifth aspect of the invention may seek to solve the same problem and provide the same technical benefit as the first aspect, including any example thereof.

Optionally in some examples, including in at least one preferred example, of any one of the above-mentioned aspects, the processing circuitry may be configured to receive input information from a rain sensor of the vehicle. Such a rain sensor is normally used for wiper control, but may in some examples also be used to provide input to the processing circuitry to temper the estimation to lower values corresponding to wet road and water slashing.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates schematically a heavy-duty vehicle according to at least one example of the invention.
**FIG. 2** illustrates schematically, in accordance with at least one example of this invention, an operation of a processing circuitry which may form part of a computer system for brake temperature estimation for a heavy-duty vehicle.
**FIG. 3** illustrates schematically, in accordance with at least some other examples of this invention, an operation of the processing circuitry of **FIG. 2****.**
**FIG. 4** illustrates schematically the heavy-duty vehicle of **FIG. 1****,** wherein some features of the heavy-duty vehicle, which may be relevant for brake temperature estimation, are exemplified.
**FIG. 5** is a schematic illustration of a computer-implemented method, in accordance with at least one example of the present invention.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the invention.

Currently used methods for brake temperature estimation typically assumes a fixed cooling rate of the brakes. Although this may generally work well for passenger cars, which have usually a fixed geometry, it does not work as well for heavy-duty vehicles such as trucks, which may have different chassis configurations, such as different number of wheel axles, different wheelbase, liftable axles, etc. The actual cooling rate of the brakes for heavy-duty vehicles therefore often differs considerably from the assumed fixed value. The computer system and the computer-implemented method of this invention solves this problem by also taking into account wheel axle data which include information about airflow-affecting geometrical attributes of one or more wheel axles of the heavy-duty vehicle. Hereby, distinction may be made between different chassis configurations, and a more accurate estimation may be made for individual vehicles.

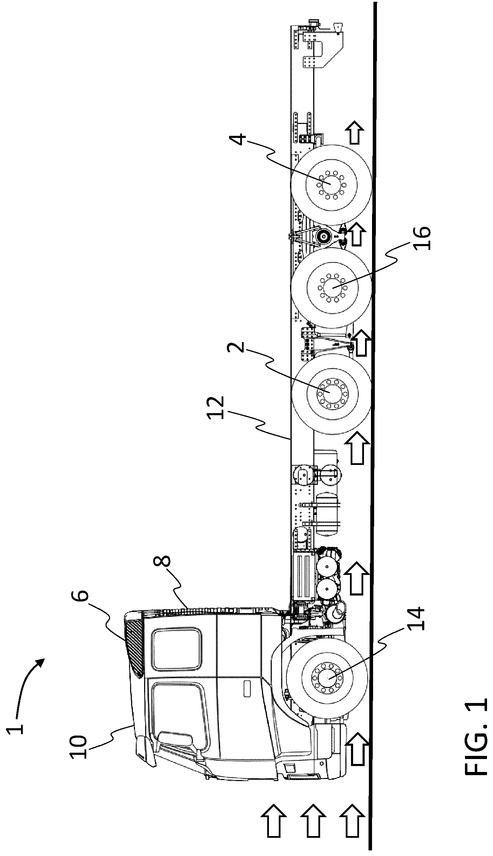

**FIG. 1** illustrates schematically a heavy-duty vehicle **1** according to at least one example of the invention. In this illustrated example, the heavy-duty vehicle **1** is an 8x2 truck (i.e. eight axle ends of which two are driven). However, the teachings of this invention may be implemented for other chassis configurations as well. For instance, the heavy-duty vehicle, may be an 8x4 truck, 6x2 truck, a bus, etc. In the present example, the heavy-duty vehicle **1** is provided with two liftable axles, a pusher axle **2** and a tag axle **4.** However, in other examples, the heavy-duty vehicle **1** may have no liftable axles. In other examples, the heavy-duty vehicle may be provided with a liftable secondary front axle. Thus, it should be understood that the teachings of this invention may be implemented for a large variety of chassis and axle configurations.

In **FIG. 1** the heavy-duty vehicle **1** is illustrated as comprising an internal combustion engine (ICE) providing propulsion to the vehicle. Air enters through an air intake **6** and moves vertically down an air duct **8.** The air may flow to an air cleaner and then to the internal combustion engine system which comprises the internal combustion engine. It should, however, be understood that the teachings of this invention may be implemented for heavy-duty vehicles being propelled by other means, such as battery electric vehicles (BEV), fuel cell electric vehicles, hybrids, etc. The illustrated heavy-duty vehicle **1** comprises a cabin **10** in which a driver may operate the heavy-duty vehicle **1.** However, it should be understood that the teachings in this invention may also be implemented in an autonomous (self-driving) heavy-duty vehicle.

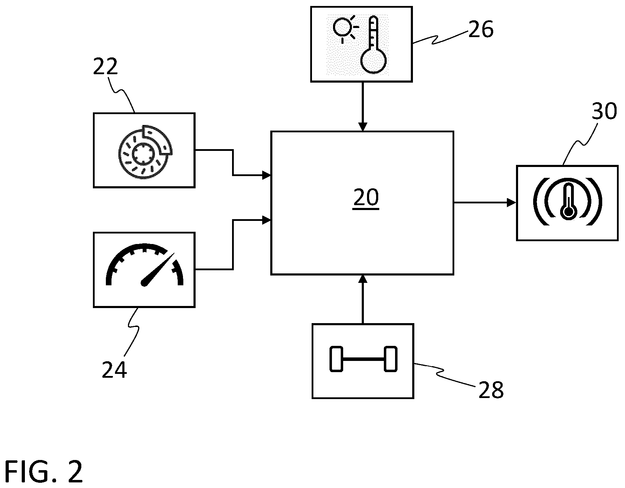

As illustrated by the rightwards pointing arrows in **FIG. 1****,** when the heavy-duty vehicle **1** is driven along a road (towards left in the drawing), there will be an airflow from the front towards the rear of the vehicle **1.** Some of the air will pass along the chassis **12** and pass by various structures, including the wheel axles **2, 4, 14, 16.** The airflow will provide a natural cooling effect on the brakes at the wheel ends. However, the cooling effect is not only dependent on factors such as ambient temperature and vehicle speed, but it is also dependent on the vehicle geometry. Different geometries affect the passing airflow differently. For instance, a lift axle (such as pusher and tag axles **2, 4**) being in a raised condition presents less obstruction to the airflow than when it is in a lowered condition. Thus, vehicle geometries may affect the actual cooling effect that the airflow provides to different brakes. Therefore, in accordance with the present invention, the heavy-duty vehicle **1** may suitably be provided with a computer system which includes a processing circuitry which may take into account such vehicle geometries when estimating the brake temperature. An example of the operation of such a processing circuitry will now be discussed in relation to **FIG. 2****.**

**FIG. 2** illustrates schematically, in accordance with at least one example of this invention, an operation of a processing circuitry **20** which may form part of a computer system for brake temperature estimation for a heavy-duty vehicle. The heavy-duty vehicle may for example be the heavy-duty vehicle **1** shown in **FIG. 1** or any other suitable heavy-duty vehicle.

As illustrated in **FIG. 2****,** the processing circuitry **20** is configured to receive brake chamber pressure data **22** indicative of a determined pressure in brake chambers of the heavy-duty vehicle. For instance, such brake chamber pressure data **22** may be provided by pressure sensors. In at least some examples, pressure sensors that are used for other purposes, such as for providing input to ABS (Anti-lock Braking System), EBS (Electronic Brake System), etc. may suitably also be used for providing input to the processing circuitry **20** for brake temperature estimation.

The processing circuity **20** is also configured to receive vehicle speed data **24** indicative of the current speed of the heavy-duty vehicle. For instance, such vehicle speed data **24** may be provided by a speedometer or tachometer.

The processing circuitry **20** is further configured to receive ambient temperature data **26** indicative of a determined ambient temperature at the heavy-duty vehicle. For instance, such ambient temperature data **26** may be provided by a temperature sensor.

The processing circuitry **20** is further configured to receive wheel axle data **28** which include information about geometrical attributes of one or more wheel axles of the heavy-duty vehicle, which geometrical attributes affect the airflow to the brakes. Such wheel axle data **28** may, for example, be stored in an electronic memory which is accessible to the processing circuitry **20.** For instance, geometrical attributes such as wheel base and other dimensions related to the chassis may suitably be stored in such an electronic memory. Other type of wheel axle data **28,** such as variable data, may be provided by sensors or switches. For instance, a sensor or switch may be used for determining if a lift axle is in a raised or lowered condition.

Based on the received brake chamber pressure data **22,** the vehicle speed data **24,** the ambient temperature data **26** and the wheel axle data **28,** the processing circuitry **20** is configured to estimate a brake temperature and may suitably output this as brake temperature estimation data **30.** The actual usage of the output brake temperature estimation data **30** from the processing circuitry **20** does not form part of this invention. However, just to give some examples, the brake temperature estimation data **30** may, for example, be used in various functions in a vehicle, such as brake fading warning, brake performance warning, adaptive cruise control, downhill cruise control, etc.

The actual estimation may suitably be performed by the processing circuitry **20** by accessing a look-up table, in which brake temperature values are stored and retrievable with a particular input. The look-up table may be populated based on empirical tests, with different input combinations. Thus, the empirical tests may include different brake chamber pressures, different vehicle speeds, different ambient temperature, and different geometrical attributes of heavy-duty vehicles. Under normal operation of vehicles, temperature sensors are not considered suitable for being fitted to the brakes. Reasons for this includes cost and durability. It is a tough area for a temperature sensor to be placed in, and for more durable solutions the costs increase. Also, fitting temperature sensors to a brake disk or pad is complicated since those parts need to be replaced on the aftermarket. However, for empirical tests, temperature sensors may advantageously be used. Thus, temperature sensors, which are not used in subsequent normal operation of the vehicle, may during the empirical tests be fitted to the brake system to measure the actual brake temperature. Thus, for each input combination, a brake temperature value will be provided in the look-up table. Rather than providing data for all possible combinations, the processing circuity **20** may suitably use interpolation to estimate values between stored values. This may significantly reduce the size of the look-up table while still providing sufficiently accurate results. Other ways to reduce the size may include a multi-resolution approach in which different levels of detail are provided in the look-up table. For common regions of the parameter space (or where high temperatures may be expected), a finer resolution may be used, whereas for other regions of the parameter space, a coarser resolution may be used.

As mentioned above, the received wheel axle data **28** include information about geometrical attributes of one or more wheel axles of the heavy-duty vehicle, which geometrical attributes affect the airflow to the brakes, and thus affects the heat dissipation from the brakes. Said geometrical attributes may, for example, include information about the position and/or orientational state of one or more wheel axles relative to the chassis of the heavy-duty vehicle. Such an orientational state may, for instance, be one of a raised condition or a lowered condition of a lift axle, such as a secondary front axle, pusher axle or tag axle. Furthermore, the wheel axle data **28** may include information about a separating distance between at least two wheel axles. For instance, the wheel axle data **28** may include information about the wheelbase of the heavy-duty vehicle.

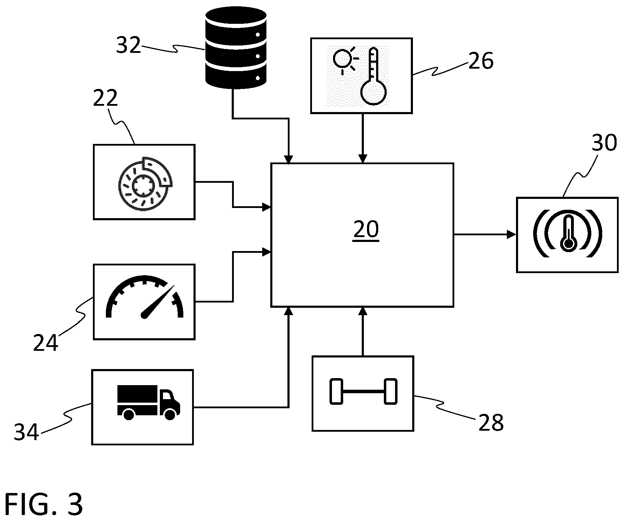

**FIG. 3** illustrates schematically, in accordance with at least some other examples of this invention, an operation of the processing circuitry **20** of **FIG. 2****.** As illustrated in **FIG. 3** the processing circuitry **20** may have access to a database **32** containing empirically determined brake temperature data. The database **32** may, for example, be or include a look-up table as discussed above. Thus, in at least some examples of this invention, the estimation of the brake temperature performed by the processing circuitry **20** includes accessing, by the processing circuitry **20,** the database **32** containing empirically determined brake temperature data.

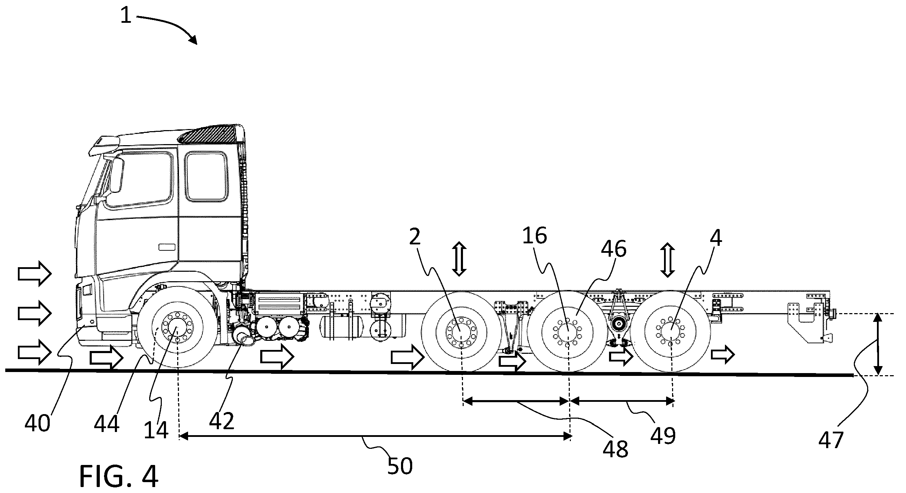

**FIG. 3** also illustrates that the processing circuitry **20** may be configured to receive dimensional data **34** which may affect the airflow to the brakes. The dimensional data **34** may include information on the ride height of the chassis, and/or dimensions of protecting and/or shielding structures which are provided at the chassis and/or at a wheel axle of the heavy-duty vehicle. The brake temperature estimation performed by the processing circuitry **20** may thus further take the received dimensional data **34** into account. Some examples of structures that may be used as basis for said dimensional data **34** will be discussed in relation to **FIG. 4****.** Also, some examples related to wheel axle data **28** will be discussed in relation to **FIG. 4****.**

In addition to the various input devices communicating with and information received by the processing circuity **20** in **FIG. 3****,** there may be other examples in which other or additional input devices may be included to provide information to the processing circuity **20** for the brake temperature estimation. For instance, in at least some examples, the processing circuitry **20** may be configured to receive input information from a rain sensor of the vehicle to temper the estimation to lower values corresponding to wet road and water slashing.

**FIG. 4** illustrates schematically the heavy-duty vehicle **1** of **FIG. 1****,** wherein some features of the heavy-duty vehicle **1,** which may be relevant for brake temperature estimation, are exemplified.
As illustrated in **FIG. 4****,** a heavy-duty vehicle may comprise a front underrun protection **40.** The dimensional data **34** referred to in **FIG. 3** may include a dimension of such a front underrun protection **40.** The dimension will affect the airflow that passes by the front underrun protection. Similarly, the dimensional data may include a dimension of a side underrun protection **42,** a dimension of a brake dust shield **44,** a dimension of wheel caps **46,** and/or a dimension of tyre size. Similarly, the dimensional data may further include information on the ride height **47** of the chassis.

With respect to the wheel axle data **28** referred to in **FIGS. 2** and **3**, as illustrated with the vertical double-arrows in **FIG. 4****,** the wheel axle data may include the presence of a pusher axle **2** and whether it is lifted or rolling; or the presence of a tag axle **4** and whether it is lifted or rolling. As indicated in **FIG. 4****,** other examples of wheel axle data may include axle spread **48, 49** (e.g. among rear axle group) and/or a wheelbase **50** of the heavy-duty vehicle **1.** This latter kind of wheel axle data, having fixed values may suitably be accessible by the processing circuity from an electronic memory. In **FIG. 4** the two illustrated axle spreads **48, 49** are of the same length, however, in other examples, the axle spreads **48, 49** may be of two different lengths.

The brake temperature may be estimated by the processing circuitry for brakes of any axle. For example, the brake temperature may be estimated for brakes of a first driven axle **16** of the heavy-duty vehicle, in particular a first non-steered driven axle of the heavy-duty vehicle (which in the illustrated example is a rear axle). As illustrated in **FIG. 4** there are numerous flow-affecting geometrical attributes located forwardly of that driven axle **16.** Indeed, in comparison there are fewer flow-affecting geometrical attributes located forwardly of the front steered axle **14.** Therefore, the brake temperature estimation according of this invention may have a relatively larger impact on accuracy with respect to the rearwardly located driven axle **16,** as compared to the impact on accuracy with respect the front steered axle **14.**

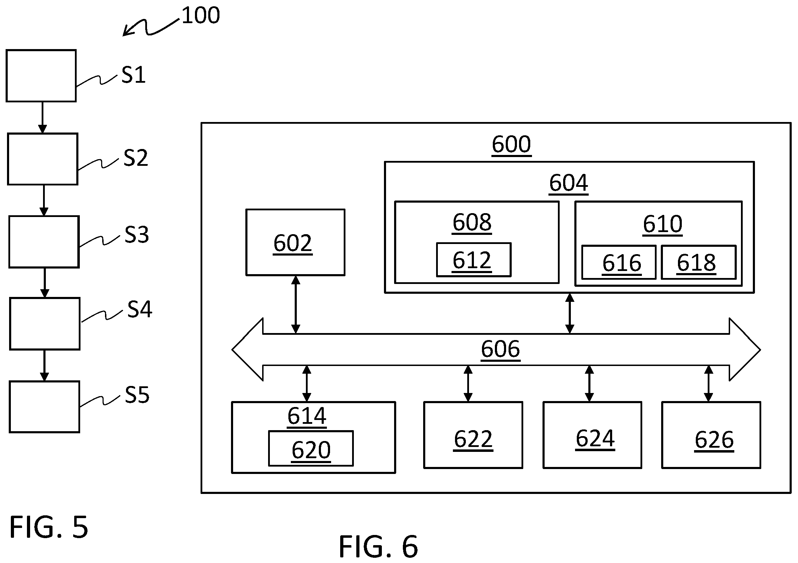

**FIG. 5** is a schematic illustration of a computer-implemented method **100,** in accordance with at least one example of the present invention. More specifically, **FIG. 5** illustrates a computer-implemented method **100** for brake temperature estimation for a heavy-duty vehicle, comprising:
- receiving **S1,** by processing circuity, brake chamber pressure data indicative of a determined pressure in brake chambers of the heavy-duty vehicle,
- receiving **S2,** by the processing circuitry, vehicle speed data indicative of the current speed of the heavy-duty vehicle,
- receiving **S3,** by the processing circuitry, ambient temperature data indicative of a determined ambient temperature at the heavy-duty vehicle,
- receiving **S4,** by the processing circuitry, wheel axle data which include information about geometrical attributes of one or more wheel axles of the heavy duty vehicle, which geometrical attributes affect the airflow to the brakes, and
- estimating **S5,** by the processing circuitry, a brake temperature based on said received brake chamber pressure data, said vehicle speed data, said ambient temperature data and said wheel axle data.
It should be noted that the actions **S1-S4** may be performed in any order, or two or more of the actions **S1-S4** may be performed simultaneously with each other. For example, all four actions **S1-S4** may be performed simultaneously with each other.

The estimating **S5** of the brake temperature may further comprise accessing a database containing empirically determined brake temperature data, such as previously discussed herein.

**FIG. 6** is a schematic diagram of an exemplary computer system for implementing examples disclosed herein, according to an example.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The processing circuitry **602** may, for example, correspond to the processing circuitry **20** discussed in relation to **FIG. 2****.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

## Claims

1. A computer system (600) for brake temperature estimation for a heavy-duty vehicle (1), the computer system (600) comprising processing circuitry (20, 602) configured to:
- receive brake chamber pressure data (22) indicative of a determined pressure in brake chambers of the heavy-duty vehicle (1),
- receive vehicle speed data (24) indicative of the current speed of the heavy-duty vehicle (1),
- receive ambient temperature data (26) indicative of a determined ambient temperature at the heavy-duty vehicle (1),
**characterized in that** the processing circuitry (20, 602) is further configured to:
- receive wheel axle data (28) which include information about geometrical attributes of one or more wheel axles (2, 4, 14, 16) of the heavy-duty vehicle (1), which geometrical attributes affect the airflow to the brakes, and
- estimate a brake temperature based on said received brake chamber pressure data (22), said vehicle speed data (24), said ambient temperature data (26) and said wheel axle data (28).

2. The computer system (600) of claim 1, wherein the estimation of the brake temperature performed by the processing circuitry (20, 602) includes accessing, by the processing circuitry (20, 602), a database (32) containing empirically determined brake temperature data.

3. The computer system (600) of any one of claims 1-2, wherein said geometrical attributes include information about the position and/or an orientational state of one or more wheel axles (2, 4, 14, 16) relative to a chassis (12) of the heavy-duty vehicle (1).

4. The computer system (600) of claim 3, wherein said orientational state is one of a raised condition or a lowered condition of a lift axle, such as a secondary front axle, pusher axle (2), or tag axle (4).

5. The computer system (600) of any one of claims 1-4, wherein said wheel axle data (28) include information about the number of wheel axles (2, 4, 14, 16) of the heavy-duty vehicle (1).

6. The computer system (600) of any one of claims 1-5, wherein said wheel axle data (28) include information about a separating distance between at least two wheel axles (2, 4, 14, 16).

7. The computer system (600) of any one of claims 1-6, wherein said wheel axle data (28) include information about the wheelbase of the heavy-duty vehicle (1).

8. The computer system (600) of any one of claims 1-7, wherein the processing circuitry (20, 602) is further configured to receive dimensional data (34), the dimensional data (34) including information on:
- the ride height (47) of the chassis (12), and/
- dimensions of protecting and/or shielding structures which are provided at the chassis (12) and/or at a wheel axle (2, 4, 14, 16) of the heavy-duty vehicle (1),
wherein the estimation performed by the processing circuitry (20, 602) further comprises estimating the brake temperature also based on the received dimensional data (34).

9. The computer system (600) of claim 8, wherein said dimensional data (34) include at least one of:
a dimension of a front underrun protection (40),
a dimension of a side underrun protection (42),
a dimension of a brake dust shield (44),
a dimension of wheel caps (46),
a dimension of tyre size.

10. The computer system (600) of any one of claims 1-9, wherein said brake temperature is estimated for brakes of a first driven axle (16) of the heavy-duty vehicle (1), in particular a first non-steered driven axle of the heavy-duty vehicle (1).

11. A vehicle (1) comprising the computer system (600) of any of claims 1-10.

12. A computer-implemented method (100) for brake temperature estimation for a heavy-duty vehicle (1), comprising:
- receiving (S1), by processing circuity (20, 602, brake chamber pressure data (22) indicative of a determined pressure in brake chambers of the heavy-duty vehicle (1),
- receiving (S2), by the processing circuitry (20, 602), vehicle speed data (24) indicative of the current speed of the heavy-duty vehicle (1),
- receiving (S3), by the processing circuitry (20, 602), ambient temperature data (26) indicative of a determined ambient temperature at the heavy-duty vehicle (1),
**characterized by:**
- receiving (S4), by the processing circuitry (20, 602), wheel axle data (28) which include information about geometrical attributes of one or more wheel axles (2, 4, 14, 16) of the heavy duty vehicle (1), which geometrical attributes affect the airflow to the brakes, and
- estimating (S5), by the processing circuitry (20, 602), a brake temperature based on said received brake chamber pressure data (22), said vehicle speed data (24), said ambient temperature data (26) and said wheel axle data (28).

13. The method (100) of claim 12, wherein said act of estimating (S5) a brake temperature further comprises accessing a database (32) containing empirically determined brake temperature data.

14. A computer program product comprising program code for performing, when executed by the processing circuitry (20, 602), the method of any of claims 12-13.

15. A non-transitory computer-readable storage medium (614) comprising instructions, which when executed by the processing circuitry (20, 602), cause the processing circuitry (20, 602) to perform the method of any of claims 12-13.

## Patentansprüche

1. Computersystem (600) zur Bremstemperaturschätzung für ein Schwerlastfahrzeug (1), wobei das Computersystem (600) eine Verarbeitungsschaltung (20, 602) umfasst, die dazu ausgelegt ist:
- Empfangen von Bremskammer-Druckdaten (22), die einen bestimmten Druck in Bremskammern des Schwerlastfahrzeugs (1) anzeigen,
- Empfangen von Fahrzeuggeschwindigkeitsdaten (24), die die aktuelle Geschwindigkeit des Schwerlastfahrzeugs (1) anzeigen,
- Empfangen von Umgebungstemperaturdaten (26), die eine bestimmte Umgebungstemperatur am Schwerlastfahrzeug (1) anzeigen,
**dadurch gekennzeichnet, dass** die Verarbeitungsschaltung (20, 602) ferner dazu ausgelegt ist:
- Empfangen von Radachsendaten (28), die Informationen über geometrische Eigenschaften einer oder mehrerer Radachsen (2, 4, 14, 16) des Schwerlastfahrzeugs (1) enthalten, wobei die geometrischen Eigenschaften den Luftstrom zu den Bremsen beeinflussen, und
- Schätzen einer Bremstemperatur basierend auf den empfangenen Bremskammer-Druckdaten (22), den Fahrzeuggeschwindigkeitsdaten (24), den Umgebungstemperaturdaten (26) und den Radachsendaten (28) .

2. Computersystem (600) nach Anspruch 1, wobei die von der Verarbeitungsschaltung (20, 602) durchgeführte Schätzung der Bremstemperatur auf eine Datenbank (32), die empirisch ermittelte Bremstemperaturdaten enthält, den Zugriff durch die Verarbeitungsschaltung (20, 602) umfasst.

3. Computersystem (600) nach einem der Ansprüche 1 bis 2, wobei die geometrischen Eigenschaften Informationen über die Position und/oder einen Ausrichtungszustand einer oder mehrerer Radachsen (2, 4, 14, 16) relativ zu einem Fahrgestell (12) des Schwerlastfahrzeugs (1) umfassen.

4. Computersystem (600) nach Anspruch 3, wobei der Ausrichtungszustand ein angehobener oder abgesenkter Zustand einer Hubachse ist, wie beispielsweise einer sekundären Vorderachse, einer Vorlaufachse (2) oder einer Nachlaufachse (4).

5. Computersystem (600) nach einem der Ansprüche 1 bis 4, wobei die Radachsendaten (28) Informationen über die Anzahl der Radachsen (2, 4, 14, 16) des Schwerlastfahrzeugs (1) enthalten.

6. Computersystem (600) nach einem der Ansprüche 1 bis 5, wobei die Radachsendaten (28) Informationen über einen Abstand zwischen mindestens zwei Radachsen (2, 4, 14, 16) enthalten.

7. Computersystem (600) nach einem der Ansprüche 1 bis 6, wobei die Radachsendaten (28) Informationen über den Radstand des Schwerlastfahrzeugs (1) enthalten.

8. Computersystem (600) nach einem der Ansprüche 1 bis 7, wobei die Verarbeitungsschaltung (20, 602) ferner dazu ausgelegt ist, Abmessungsdaten (34) zu empfangen, wobei die Abmessungsdaten (34) Informationen beinhalten über:
- die Bodenfreiheit (47) des Fahrgestells (12), und/
- Abmessungen von Schutz- und/oder Abschirmstrukturen enthalten, die am Fahrgestell (12) und/oder an einer Radachse (2, 4, 14, 16) des Schwerlastfahrzeugs (1) vorgesehen sind, wobei die von der Verarbeitungsschaltung (20, 602) durchgeführte Schätzung ferner die Schätzung der Bremstemperatur auch auf Basis der empfangenen Abmessungsdaten (34) umfasst.

9. Computersystem (600) nach Anspruch 8, wobei die Abmessungsdaten (34) mindestens eines umfassen aus:
einer Abmessung eines vorderen Unterfahrschutzes (40),
einer Abmessung eines seitlichen Unterfahrschutzes (42),
einer Abmessung eines Bremsstaub-Schutzschilds (44),
einer Abmessung von Radkappen (46),
einer Abmessung einer Reifengröße.

10. Computersystem (600) nach einem der Ansprüche 1 bis 9, wobei die Bremstemperatur für Bremsen einer ersten Antriebsachse (16) des Schwerlastfahrzeugs (1) geschätzt wird, insbesondere einer ersten nicht gelenkten Antriebsachse des Schwerlastfahrzeugs (1).

11. Fahrzeug (1), das das Computersystem (600) nach einem der Ansprüche 1 bis 10 umfasst.

12. Computerimplementiertes Verfahren (100) zur Bremstemperaturschätzung für ein Schwerlastfahrzeug (1), umfassend:
- Empfangen (S1) von Bremskammer-Druckdaten (22), die einen bestimmten Druck in Bremskammern des Schwerlastfahrzeugs (1) anzeigen, durch eine Verarbeitungsschaltung (20, 602,
- Empfangen (S2) von Fahrzeuggeschwindigkeitsdaten (24), die die aktuelle Geschwindigkeit des Schwerlastfahrzeugs (1) anzeigen, durch die Verarbeitungsschaltung (20, 602),
- Empfangen (S3) von Umgebungstemperaturdaten (26), die eine bestimmte Umgebungstemperatur am Schwerlastfahrzeug (1) anzeigen, durch die Verarbeitungsschaltung (20, 602), **gekennzeichnet durch:**
- Empfangen (S4) von Radachsendaten (28), die Informationen über geometrische Eigenschaften einer oder mehrerer Radachsen (2, 4, 14, 16) des Schwerlastfahrzeugs (1) enthalten, durch die Verarbeitungsschaltung (20, 602), wobei die geometrischen Eigenschaften den Luftstrom zu den Bremsen beeinflussen, und
- Schätzen (S5) einer Bremstemperatur basierend auf den empfangenen Bremskammer-Druckdaten (22), den Fahrzeuggeschwindigkeitsdaten (24), den Umgebungstemperaturdaten (26) und den Radachsendaten (28) durch die Verarbeitungsschaltung (20, 602).

13. Verfahren (100) nach Anspruch 12, wobei der Schritt des Schätzens (S5) einer Bremstemperatur ferner den Zugriff auf eine Datenbank (32) umfasst, die empirisch ermittelte Bremstemperaturdaten enthält.

14. Computerprogrammprodukt, das Programmcode zur Ausführung des Verfahrens nach einem der Ansprüche 12 bis 13 umfasst, wenn es durch die Verarbeitungsschaltung (20, 602) ausgeführt wird.

15. Nichtflüchtiges computerlesbares Speichermedium (614), das Anweisungen umfasst, die, wenn sie durch die Verarbeitungsschaltung (20, 602) ausgeführt werden, die Verarbeitungsschaltung (20, 602) veranlassen, das Verfahren nach einem der Ansprüche 12 bis 13 durchzuführen.

## Revendications

1. Système informatique (600) pour l'estimation de la température de freinage pour un véhicule utilitaire lourd (1), le système informatique (600) comprenant des circuits de traitement (20, 602) configurés pour :
- recevoir des données de pression de chambre de frein (22) indicatives d'une pression déterminée dans des chambres de frein du véhicule utilitaire lourd (1),
- recevoir des données de vitesse de véhicule (24) indicatives de la vitesse actuelle du véhicule utilitaire lourd (1),
- recevoir des données de température ambiante (26) indicatives d'une température ambiante déterminée au niveau du véhicule utilitaire lourd (1),
**caractérisé en ce que** les circuits de traitement (20, 602) sont en outre configurés pour :
- recevoir des données d'essieu de roue (28) qui incluent des informations concernant des attributs géométriques d'un ou plusieurs essieux de roue (2, 4, 14, 16) du véhicule utilitaire lourd (1), lesquels attributs géométriques affectent le flux d'air vers les freins, et
- estimer une température de freinage à partir desdites données de pression de chambre de frein (22) reçues, desdites données de vitesse de véhicule (24), desdites données de température ambiante (26) et desdites données d'essieu de roue (28).

2. Système informatique (600) selon la revendication 1, dans lequel l'estimation de la température de freinage réalisée par les circuits de traitement (20, 602) inclut l'accès, par les circuits de traitement (20, 602), à une base de données (32) contenant des données de température de freinage déterminées de manière empirique.

3. Système informatique (600) selon l'une quelconque des revendications 1 à 2, dans lequel lesdits attributs géométriques incluent des informations concernant la position et/ou un état d'orientation d'un ou plusieurs essieux de roue (2, 4, 14, 16) par rapport à un châssis (12) du véhicule utilitaire lourd (1).

4. Système informatique (600) selon la revendication 3, dans lequel ledit état d'orientation est l'un parmi une condition levée ou une condition baissée d'un essieu relevable tel qu'un essieu avant secondaire, un essieu pousseur (2), ou un essieu traîné (4).

5. Système informatique (600) selon l'une quelconque des revendications 1 à 4, dans lequel lesdites données d'essieu de roue (28) incluent des informations concernant le nombre d'essieux de roue (2, 4, 14, 16) du véhicule utilitaire lourd (1).

6. Système informatique (600) selon l'une quelconque des revendications 1 à 5, dans lequel lesdites données d'essieu de roue (28) incluent des informations concernant une distance de séparation entre au moins deux essieux de roue (2, 4, 14, 16).

7. Système informatique (600) selon l'une quelconque des revendications 1 à 6, dans lequel lesdites données d'essieu de roue (28) incluent des informations concernant l'empattement du véhicule utilitaire lourd (1).

8. Système informatique (600) selon l'une quelconque des revendications 1 à 7, dans lequel les circuits de traitement (20, 602) sont en outre configurés pour recevoir des données dimensionnelles (34), les données dimensionnelles (34) incluant des informations sur :
- la hauteur de conduite (47) du châssis (12), et/ou
- des dimensions de structures de protection et/ou de blindage qui sont prévues au niveau du châssis (12) et/ou au niveau d'un essieu de roue (2, 4, 14, 16) du véhicule utilitaire lourd (1), dans lequel l'estimation réalisée par les circuits de traitement (20, 602) comprend en outre l'estimation de la température de freinage également à partir des données dimensionnelles (34) reçues.

9. Système informatique (600) selon la revendication 8, dans lequel lesdites données dimensionnelles (34) incluent au moins une parmi :
une dimension d'une protection anti-encastrement avant (40),
une dimension d'une protection anti-encastrement latérale (42),
une dimension d'un flasque de protection contre la poussière de frein (44),
une dimension d'enjoliveurs de roue (46),
une dimension de taille de pneu.

10. Système informatique (600) selon l'une quelconque des revendications 1 à 9, dans lequel ladite température de freinage est estimée pour des freins d'un premier essieu moteur (16) du véhicule utilitaire lourd (1), en particulier un premier essieu moteur non directeur du véhicule utilitaire lourd (1).

11. Véhicule (1) comprenant le système informatique (600) selon l'une quelconque des revendications 1 à 10.

12. Procédé mis en œuvre par ordinateur (100) pour l'estimation de la température de freinage pour un véhicule utilitaire lourd (1), comprenant :
- la réception (S1), par des circuits de traitement (20, 602), de données de pression de chambre de frein (22) indicatives d'une pression déterminée dans des chambres de frein du véhicule utilitaire lourd (1),
- la réception (S2), par les circuits de traitement (20, 602), de données de vitesse de véhicule (24) indicatives de la vitesse actuelle du véhicule utilitaire lourd (1),
- la réception (S3), par les circuits de traitement (20, 602), de données de température ambiante (26) indicatives d'une température ambiante déterminée au niveau du véhicule utilitaire lourd (1), **caractérisé par** :
- la réception (S4), par les circuits de traitement (20, 602), de données d'essieu de roue (28) qui incluent des informations concernant des attributs géométriques d'un ou plusieurs essieux de roue (2, 4, 14, 16) du véhicule utilitaire lourd (1), lesquels attributs géométriques affectent le flux d'air vers les freins, et
- l'estimation (S5), par les circuits de traitement (20, 602), d'une température de freinage à partir desdites données de pression de chambre de frein (22) reçues, desdites données de vitesse de véhicule (24), desdites données de température ambiante (26) et desdites données d'essieu de roue (28).

13. Procédé (100) selon la revendication 12, dans lequel ledit acte d'estimation (S5) d'une température de freinage comprend en outre l'accès à une base de données (32) contenant des données de température de freinage déterminées de manière empirique.

14. Produit-programme d'ordinateur comprenant du code de programme pour réaliser, lorsqu'il est exécuté par les circuits de traitement (20, 602), le procédé selon l'une quelconque des revendications 12 à 13.

15. Support de stockage lisible par ordinateur non transitoire (614) comprenant des instructions qui, lorsqu'elles sont exécutées par les circuits de traitement (20, 602), amènent les circuits de traitement (20, 602) à réaliser le procédé selon l'une quelconque des revendications 12 à 13.
